# EUROPÄISCHE PATENTSCHRIFT

(11) **EP 0 925 551 B1**
(45) Veröffentlichungstag und Bekanntmachung des Hinweises auf die Patenterteilung: **24.07.2002**
(21) Anmeldenummer: 97942920.6
(22) Anmeldetag: 13.09.1997
(51) Int. Cl.: G06K 19/07

(54) **VERFAHREN ZUM ABGLEICH EINES EMPFANGSSCHWINGKREISES EINES TRANSPONDERS IN EINEM RFID SYSTEM**
METHOD FOR TUNING AN OSCILLATING RECEIVER CIRCUIT OF A TRANSPONDER BUILT INTO A RFID SYSTEM
TECHNIQUE DE REGLAGE D'UN CIRCUIT RECEPTEUR OSCILLANT D'UN TRANSPONDEUR INTEGRE A UN SYTEME D'IDENTIFICATION A BALAYAGE (RFID)

(30) Priorität: 13.09.1996 DE 19637319
(43) Veröffentlichungstag der Anmeldung: 30.06.1999
(73) Patentinhaber: ATMEL Germany GmbH, 74072 Heilbronn (DE)
(72) Erfinder: BRUHNKE, Michael, D-80809 München (DE); HIRSCH, Konrad, D-85356 Freising (DE); MELCHIOR, Marc, D-85777 Kammerberg (DE); SCHÜLGEN, Andreas, D-85386 Eching (DE)
(74) Vertreter: Kolb, Georg
(86) Internationale Anmeldenummer: EP9705011
(87) Internationale Veröffentlichungsnummer: WO9811505

(56) Entgegenhaltungen:
- DE-C- 4 438 286
- DE-C- 4 438 287
- US-A- 5 550 536

## Beschreibung

Die Erfindung betrifft ein Verfahren zum Abgleich eines Empfangsschwingkreises eines Transponders in einem RFID System auf Resonanz zu der Frequenz des von einem Lesegerät erzeugten Abfragesignals, wobei der Empfangsschwingkreises aus mindestens einer Induktivität und aus mindestens einer Kapazität besteht.

Bei der Identifikation von Personen, Tieren und Objekten hat sich in den letzten Jahren ein System bewährt, bei dem ein stationäres bzw. tragbares Lesegerät einen mit dem zu identifizierenden Objekt verbundenen Transponder über ein Wechselfeld mit Energie versorgt, woraufhin der Transponder mit dem Aussenden der in ihm gespeicherten Daten antwortet. Aufgrund des verwendeten Frequenzberelchs spricht man auch von Radiofrequenz-Identifikations-Systemen, kurz RFID.

Ein RFID- Transponder besteht im allgemeinen aus einer Antennenspule und einem integrierten Schaltkreis, der alle notwendigen elektronischen Schaltungsblöcke, wie z. B. zur Spannungsversorgung, zur Taktgenerierung, zur Ablaufsteuerung und zur Speicherung der für die Identifizierung notwendigen Daten, beinhaltet. Die zur Antennenspule parallel geschaltete Kapazität ist ebenfalls häufig Bestandteil des integrierten Schaltkreises. Sie kann jedoch auch durch ein diskretes Bauelement gebildet werden.

Das RFID- Lesegerät besteht aus einem Schwingkreis mit einer Sendespule und einer Kapazität, der von einer Treiberstufe mit einem Signal mit einer im allgemeinen festen Frequenz, z.B. 125 kHz angesteuert wird. Weiterhin enthält das Lesegerät elektronische Schaltungsblöcke, um die durch die Absorptionsmodulation vom Transponder gesendeten Daten zu erkennen und um Daten und Befehle, z. B. durch Modulation des Feldes, an den Transponder zu senden.

Lesegerät und Transponder bilden bei der Daten- bzw. bei der Energieübertragung einen lose gekoppelten Transformator. Deshalb ist die Energieübertragung relativ gering.

Die erzielbare Reichweite für die kontaktlose Übertragung von Energie und Daten wird durch folgende Randbedingungen beeinflußt:
- Sendeenergie (beschränkt durch gesetzliche Bestimmungen)
- Spulenabmessungen
- Störpegel der Umgebung
- Übereinstimmung der Resonanzfrequenzen
- Modulationshub
- Spannungsverlust über den Gleichrichter
- Verwendete Übertragungsverfahren

Damit auf der Seite des Transponders eine für seinen Betrieb ausreichende Spannung zur Verfügung steht, sollte der von der Antennenspule und der parallel geschalteten Kapazität gebildete Empfangsschwingkreis in Resonanz zur in Resonanz zur übertragungsfrequenz betrieben werden.

Aufgrund der Toleranzen der Bauteile beim Herstellen des Transponders ist dies im Allgemeinen nicht sichergestellt.

Aus der DE 44 38 287 C1 ist ein System zur kontaktlosen Energie- und Datenübertragung bekannt, bei dem zum Abglelch der Kapazität des Resonanzschwingkreises, eine Reihe von parallel zur Kapazität angeordneten Kondensatoren gemäß einem ein einem Speicher abgelegten wert hinzugeschaltet werden.

Aus der DE 44 38 268 C1 ist weiterhin ein Verfahren bekannt, um bei der Anordnung nach der DE 44 38 287 C1 den optimalen Abgleichwert beim Betrieb direkt auf dem Transponder zu ermitteln. Hierzu ist ein differentieller Abtasthaltedetektor zur Abtastung des Spannungssignals vorgesehen. Dieser steht in Verbindung mit der Steuerungseinrichtung und einem Zähler. Der Abgleich wird bei bestimmten Änderungen der Differenz beendet. Diese Vorgehensweise hat den Nachteil, daß in Abhängikeit von der Anzahl der durchzuführenden Schritte der Abgleichvorgang unterschiedlich lange dauert. Bei Zeitkritischen Antwortzeiten des Transpondersystems können unterschiedliche Antwortzeiten bisweilen nicht geduldet werden.

Aufgabe der Erfindung ist es daher, ein Verfahren zum automatischen Abgleich eines Empfangsschwingkreises eines Transponders in einem RFID System anzugeben, das konstante Antwortzelten aufweist..

Diese Aufgabe wird durch ein Verfahren mit den Merkmalen des Anspruchs 1 gelöst.

Die Vorteilhafte Ausgestaltung der Erfindung erfolgt nach den Merkmalen der abhängigen Ansprüche.

Kurze Beschreibung der Figuren:
- Figur 1: Ablaufdiagramm des Verfahrens
- Figur 2: Ablauf des Abgleichs gemäß einen zweiten Aufgestaltung des Verfahrens
- Figur 3: zeigt ein Blockschaltbild einer ersten Schaltungsanordnung zur Durchführung des Verfahrens;
- Figur 4: zeigt ein Blockschaltbild der Schaltungsanordnung einer zweiten Schaltungsanordnung zur Durchführung des Verfahrens;
- Figur 5 zeigt: die Änderung der Spulenspannung V_{vcil1/2} beim Ablauf des Abgleichs;
- Figur 6: zeigt die Änderung der Ausgangsspannung der Filterstufe beim Ablauf des Abgleichs;
- Figur 7: zeigt die Änderung der Gesamtkapazität des Empfangsschwingkreises beim Ablauf des Abgleichs;

Nachfolgend wird die Erfindung anhand eines Ausführungsbeispiels unter Zuhilfenahme der Figuren erläutert.

Beispielsweise in der Anwendung in Form einer Wegfahrsperre ergeben sich durch die kleine um das Zündschloß herum angeordnete Sendespule extrem ungünstige übertragungsbedingungen. Darum gilt es, das System auf minimale Verluste hin zu optimieren. Entscheidend ist dabei:
- Gleiche Resonanzfrequenz von Basisstation und Transponder
- Zeitlich optimierte Übertragungsprotokolle
- Minimale Verluste bei der Energieübertragung
- Maximaler Modulationshub bei der Datenübertragung zur Basisstation (Read)
- Optimierte Datenübertragung zum Transponder (Send)

Damit trotz des geringen von der Basisstation gesendeten elektromagnetlschen Feldes die Energie für den Betrieb des Transponders und für die Übertragung der Daten ausreicht, sollten die Resonanzfrequenzen übereinstimmen. Dieses ist fertigungstechnisch aufgrund der Bautelletoleranzen der Kondensatoren, Spulen usw. nicht realisierbar.

Im folgenden wird ein Verfahren beschrieben, bei dem sich der Transponder während der Initialisierungsphase auf die Resonanzfrequenz der Basisstation abgleicht.

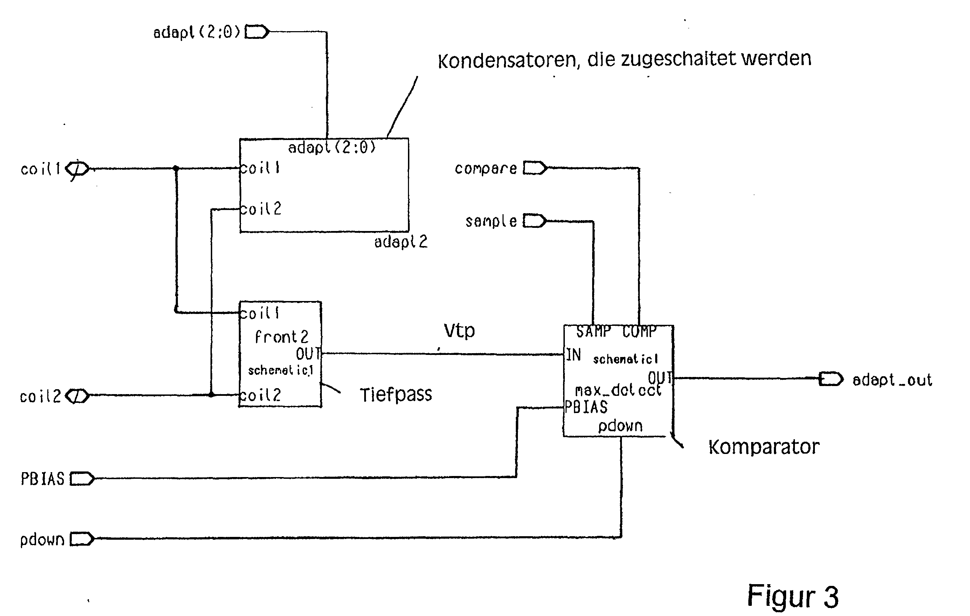

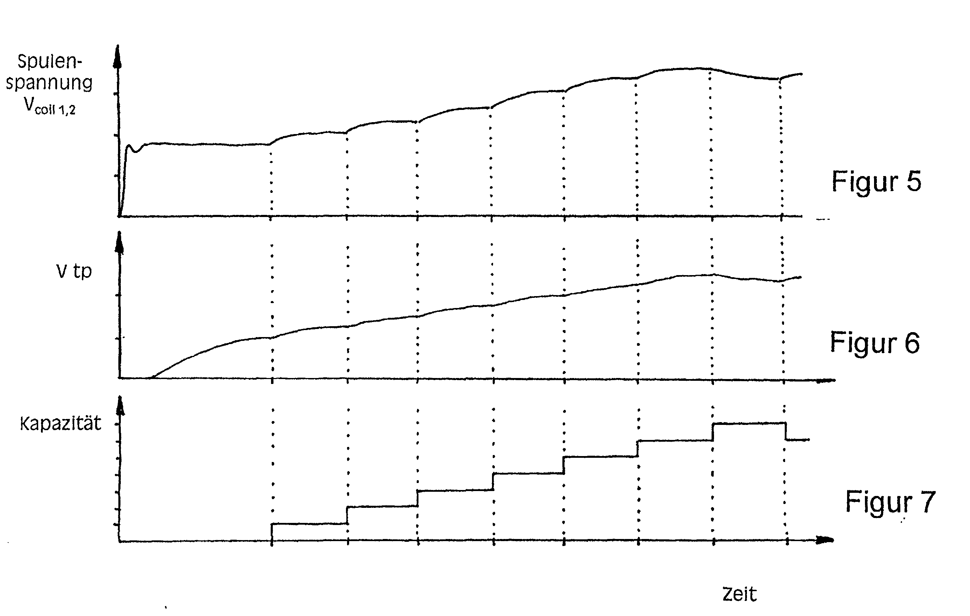

Es wurde ein Verfahren entwickelt, bei dem sich der Transponder während der Initialisierungsphase auf die Resonanzfrequenz der Basisstation abgleicht. Dieses geschieht, indem stufenförmig Kondensatoren an den LC-Schwingkreis hinzu geschaltet und auf den maximalen Spannungswert einjustiert werden. Dabei wird die Spulenspannung Vcoil mittels eines Tiefpasses gleichgerichtet und geglättet. Diese Spannung Vtp,1 wird gespeichert. Anschließend werden in gleichmäßigen Schritten Kondensatoren parallel zu dem LC-Schwingkreis geschaltet, wodurch sich die Resonanzfrequenz und somit auch die induzierte Spannung bzw. Vtp verändert. Diese neue Vtp,2-Spannung wird mittels eines Komparators mit der vorherigen Vtp,1 verglichen. Sobald Vtp,n+1 kleiner als Vtp,n ist, wird dieses registriert und der Kondensatorwert von Vtp,n (Maximalwert) hinzu geschaltet. Dieser aktive Selbstabgleich der Resonanzfrequenz wird bei jeder Initialisierung durchgeführt, kann aber auch angesprochen werden, indem von der Basisstation eines spezielle Sequenz zu dem Transponder gesendet wird. Die Figur 3 zeigt ein Blockschaltbild einer Schaltungsanordnung zur Durchführung des Verfahrens. Die Figuren 5 bis 7 zeigen die Änderung der Spannungen beim Ablauf des Abgleichs.

Vorteil: bessere Energieübertragung -> höhere Versorgungsspannung + größerer Modulationshub (im schwachen Feld) -> größere Funktionsreichweite

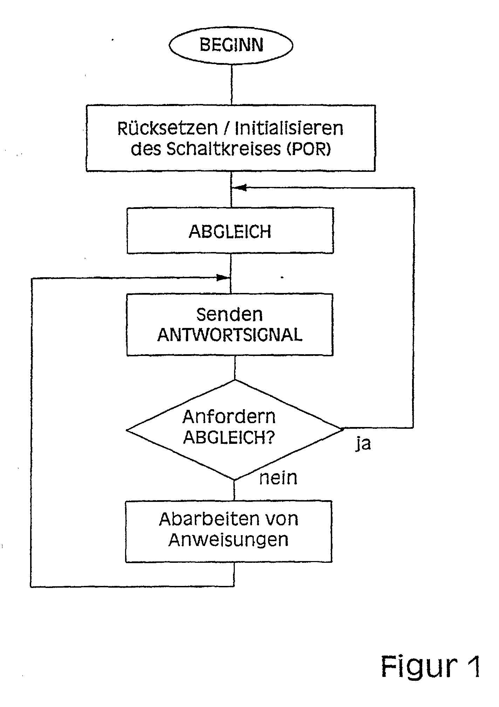

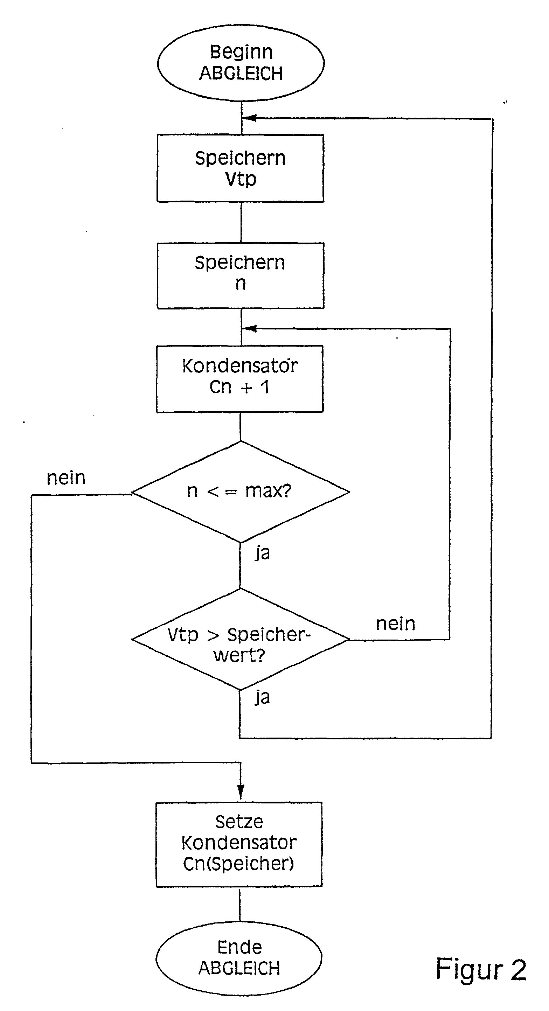

Figur 1 zeigt ein Ablaufdiagramm des Verfahrens. Der Verfahrensschritt "Abgleich" ist in der Figur 2 detailliert dargestellt. Im folgenden wird der Ablauf des Verfahrens gemäß Figuren 1 und 2 beschrieben.

Dabei, wird der gesamte Bereich des Abgleichs zunächst vollständig durchlaufen. Am Ende werden die Kondensatoren zum Empfangsschwingkreises hinzu geschaltet, für die die maximale gleichgerichtete und geglättete Spannung Vtp im Speicher abgelegt wurde.

Nach dem Beginn des Empfangs eines Abfragesignals und nachdem der integrierte Schaltkreis durch Rücksetzen In einen definierten Ausgangszustand gesetzt wurde, wird die Spulenspannung Vcoil gleichgerichtet und mittels eines Tiefpasses geglättet. Die so erzeugte Spannung Vtp,1 wird vorläufig als Referenzwert in einem ersten Speicher SP abgelegt. In einem zweiten Speicher wird eine die Konfiguration der Kondensatoren Cn eindeutig beschreibende Bezugsnummer abgelegt. Anschließend werden in gleichmäßigen Schritten Kondensatoren Cn parallel zu dem LC-Schwingkreis des Empfangsschwingkreises geschaltet. Dadurch verändert sich seine Resonanzfrequenz und somit die induzierte Spulenspannung Vcoil und schließlich auch die gleichgerichtete und geglättete Spannung Vtp. Durch Hinzuschalten eines ersten Kondensators C1 ändert sich mit der Resonanzfrequenz des Empfangsschwingkreises auch die zur Auswertung herangezogene Spannung Vtp. Diese neue, geänderte, in einem zweiten Zeitpunkt vorliegende Spannung Vtp,2 wird mittels eines Komparators mit der vorherigen, im Speicher abgelegten Spannung Vtp,1 verglichen. Ist die im zweiten Zeitpunkt vorliegende Spannung Vtp,2 größer als der im Speicher abgelegte wert, so wird die neue Spannung Vtp,2 anstatt der vorherigen Spannung Vtp,1 und die neue, die Konfiguration der Kondensatoren Cn eindeutig beschreibende Bezugsnummer in den Speicher geschrieben, der nächste Kondensator hinzu geschaltet und der Vergleich mit dem neuen Wertepaar, der neuen, dritten Spannung Vtp,3 und dem im Speicher abgelegten Wert der zweiten Spannung Vtp,2, wiederholt.

Ist die im zweiten Zeitpunkt vorliegende Spannung Vtp,2 kleiner als der im Speicher abgelegte Wert, so wird, ohne den Speicherinhalt zu verändern, der nächste Kondensator hinzu geschaltet und der Vergleich mit dem neuen Wertepaar, der neuen, dritten Spannung Vtp,3 und dem im Speicher abgelegten Wert der zweiten Spannung Vtp,2, wiederholt.

Wurde der gesamte Bereich des Abgleichs vollständig durchlaufen, so wird die Konfiguration der Kondensatoren Cn zum Empfangsschwingkreis hinzu geschaltet, die der im Speicher abgelegten Bezugsnummer entspricht.

Diese Methode des Abgleichs ist Insbesondere dann vorzuziehen, wenn beim Einschalten des Abfragesignals bzw. beim Eintauchen des Transponders in ein Abfragefeld ein bestimmtes zeitliches Verhalten des Transponders gewünscht wird.

Figur 3 zeigt ein erstes Ausführungsbeispiel einer Schaltungsanordnung zur Durchführung des Verfahrens im Blockschaltbild. Dieses weist zum Abgleich des Empfangsschwingkreises auf Resonanz zu der Frequenz des Abfragesignals folgende Funktionseinheiten auf:
Der Empfangsschwingkreises des Transponders besteht aus mindestens einer Induktivität und mindestens einer Kapazität und wird über das Anschlußpaar Coil1/Coil2 mit der Schaltungsanordnung verbunden. Diese besteht aus einer Vielzahl von Kapazitäten, die durch ansteuerbare Schalter parallel zur Kapazität des Empfangsschwingkreis schaltbar sind ― dargestellt in der Figur 3 durch den Schaltungsblock mit der Bezeichnung Adapt. Ebenfalls mit dem Anschlußpaar Coil1/Coil2 ist ein Tiefpaßfilter verbunden ― dargestellt in der Figur 3 durch den Schaltungsblock mit der Bezeichnung front2. Das Ausgangssignal Vtp des Tiefpaßfilters wird einer Komparatorstufe zugeführt ― dargestellt in der Figur 3 durch den Schaltungsblock mit der Bezeichnung max_detect. In der Komparatorstufe wird das Ausgangssignal Vtp des Tiefpaßfilters mit dem dort gespeicherten, bisher aufgetretenen Maximalwert verglichen. In Abhängigkeit von dessen Ausgangssignal adapt_out werden die Vielzahl von Kapazitäten adapt angesteuert.

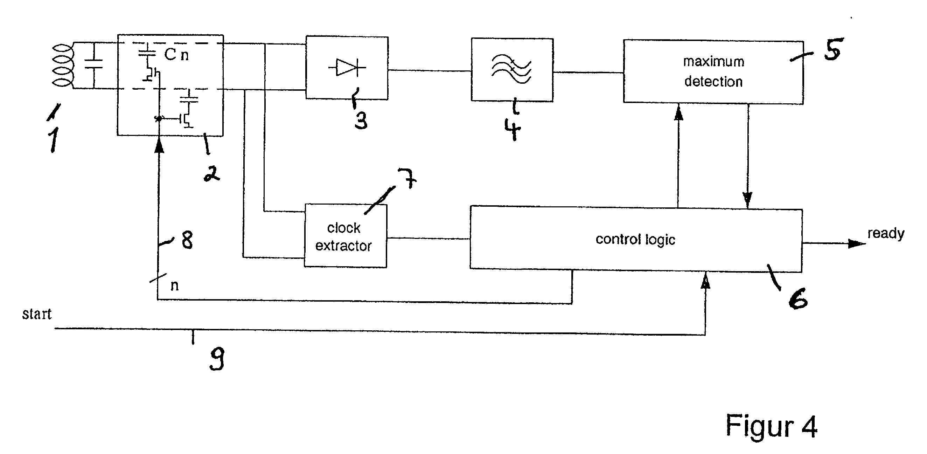

Die Figur 4 zeigt die schaltungsanordnung nochmals in einer verbesserten Darstellung. Es sind nur die Funktionseinheiten des Transponders dargestellt, die zur Funktion des Abgleichs wesentlich beitragen. Der Empfangsschwingkreis 1 des Transponders, bestehend aus mindestens einer Induktivität und mindestens einer Kapazität, bildet mit dem nicht dargestellten Schwingkreis des Lesegeräts einen lose gekoppelten Transformator. Parallel zur Kapazität des Empfangsschwingkreises 1 sind eine Vielzahl von Kapazitäten 2, die durch ansteuerbare Schalter zur Kapazität des Empfangsschwingkreis hinzu schaltbar sind, angeordnet. Die Ansteuerung der Schalter erfolgt durch eine Steuerlogik 6. Die Steuerlogik 6 bekommt außerdem ein aus dem Abfragesignal erzeugtes Taktsignal zugeführt. Anhand dieses Taktsignals werden eine Vielzahl von Kapazitäten, die durch ansteuerbare Schalter parallel zur Kapazität des Empfangsschwingkreis schaltbar sind, stufen- und schrittweise angesteuert. Der Empfangsschwingkreis 1 ist weiterhin mit einer Gleichrichterstufe 3 und einer Takterzeugerschaltung 7 verbunden. Das von der Gleichrichterstufe 3 gleichgerichtete Signal wird einer Filterstufe 4 zur Glättung zugeführt. Die Filterstufe ist als Tiefpaßfilter ausgestaltet. Das derart gleichgerichtete und geglättete Signal wird dem Eingang eines Maximumdetektors 5 zugeführt. Der Maximumdetektor vergleicht das an seinem Eingang anliegende Signal mit einer abgespeicherten Größe und übernimmt den jeweils größeren in seinen Speicher. Dadurch enthält der Speicher des Maximumdetektors immer den größten Wert des gleichgerichteten und geglätteten Signals seit Beginn des Abgleichs. Der Maximumdetektor 5 ist mit der Steuerlogik 6 verbunden. Diese stellt die schaltbaren Kondensatoren so ein, daß wieder der maximale Wert erzielt wird und zeigt an einem weiteren Ausgang an daß der Abgleich beendet ist.

Die schaltbaren Kapazitäten bestehen vorteilhaft aus einer Reihenschaltung eines Kondensators und eines Schalttransistors, wobei der Schalttransistor von der Steuerlogik angesteuert wird. Jeweils ein Paar von gleich dimensionierten Kondensatoren werden von der steuerlogik angesteuert, wobei die erste Reihenschaltung von Kondensator und Schalttransistors jeweils den ersten Anschluß des Empfangsschwingkreis mit dem Massepotential verbindet und die zweite Reihenschaltung von Kondensator und Schalttransistors den zweiten Anschluß des Empfangsschwingkreis mit dem Massepotential verbindet.

In den Figuren 5 und 6 sind die Änderungen der Spulenspannung des Empfangsschwingkreises (Figur 5) und die damit verbundene Änderung der Ausgangsspannung der Filterstufe (Figur 6) dargestellt. In der Figur 7 sieht man die Änderung der Gesamtkapazität des Empfangsschwingkreises, die durch das Hinzuschalten der schaltbaren Kondensatoren C1-Cn hervorgerufen wird. Die Zeitachsen der Figuren 5 bis 7 sind identisch.

In einer vorteilhaften Ausgestaltung enthält die Steuerlogik einen n-stufigen Dualzähler, dessen Ausgänge n Paare von Kondensatoren/Schaltern ansteuern. Die werte der einzelnen Paare der Kondensatoren sind dabei so gewählt, daß sie paarweise binär gewichtet abgestuft sind und somit einen weiten Wertebereich abdecken. Beispielsweise würde ein vierstufiger binärer Zähler an seinen Ausgängen 4 Paare von Kondensatoren ansteuern. Die Kapazitäten entsprechen dann den jeweils zugeordneten Zählerstufen und betragen ein-, zwei-, vier- und achtfache eines Grundwert, beispielsweise 10 pF. Mit einer solchen Anordnung kann der Empfangsschwingkreis neben seiner Grundeinstellung in 15 stufen verändert werden.

In einer weiteren Ausgestaltung der Schaltungsanordnung sind alle Kondensatoren gleich groß ausgebildet. Sie können dann direkt angesteuert werden oder zu Gruppen zusammen geschaltet sein, die den oben beschriebenen binär gewichteten Werten entsprechen.

Durch das zuvor beschriebene Verfahren und die dazugehörige Schaltungsanordnung ist es möglich, den Empfangsschwingkreis eines Transponders auf Resonanz zur Frequenz zum Abfragesignal abzustimmen. Dieser Abgleich kann bei jeder Inbetriebnahme des Transponders erfolgen, oder auch durch ein vorgegebenes Kommando vom Lesegerät ausgelöst werden. Auch zum einmaligen, fabrikmäßigen Abgleich auf eine vorgegebene Frequenz um die Bauteiletoleranzen des Empfangsschwingkreises auszugleichen können Verfahren und Schaltungsanordnung eingesetzt werden. Dann wird die durch einen einmaligen Abgleich ermittelte Einstellung, z.B. der Zählerstand des die Schalter der Kondensatoren ansteuernden Zählers, in einem Festwertspeicher des Transponders dauerhaft abgespeichert und bei jeder Initialisierung wieder zur Ansteuerung der Kondensatoren verwendet.

## Patentansprüche

1. Verfahren zum Abgleich eines Empfangsschwingkreises eines Transponders in einem RFID System auf Resonanz zu der Frequenz eines von einem Lesegerät ausgesendeten Abfragesignals, wobei der Empfangsschwingkreises aus mindestens einer Induktivität und aus mindestens einer Kapazität besteht, wobei die Kapazität des Empfangsschwingkreises schrittweise durch hinzu- bzw. hinwegschalten einer Vielzahl von einzelnen Kondensatoren geändert und schließlich so eingestellt wird, daß das vom Transponder empfangene Abfragesignal einen innerhalb des Änderungsbereiches maximalen Spannungswert annimmt, und wobei die Kapazitätswerte der Kondensatoren binär gewichtet abgestuft sind und die Ansteuerung der Kondensatoren durch binäres Zählen erfolgt.
**dadurch gekennzeichnet,**
**daß** zum Abgleich alle werte der Kondensatoren im Änderungsbereich geschaltet werden, der Zählerstand beim maximalen Spannungswert festgehalten und schließlich die Kondensatoransteuerung für diesen Zählerstand eingestellt wird.

2. Verfahren nach Anspruch 1, **dadurch gekennzeichnet, daß** der Abgleich unmittelbar nach Beginn des Empfangs des Abfragesignals durchgeführt wird.

3. Verfahren nach Anspruch 1, **dadurch gekennzeichnet, daß** der Abgleich nach dem Empfang eines entsprechenden, vom Lesegerät gesendeten Kommandos durchgeführt wird.

4. Verfahren nach einem der Ansprüche 1-3, **dadurch gekennzeichnet, daß** der Abgleich von größeren Frequenzen hin zu kleineren Frequenzen erfolgt.

5. Verfahren nach einem der Ansprüche 1-3, **dadurch gekennzeichnet, daß** der Abgleich von kleineren Frequenzen hin zu größeren Frequenzen erfolgt.

## Claims

1. Method for tuning an oscillating receiver circuit of a transponder in an RFID system to resonance with the frequency of an interrogation signal which is emitted by a reader, wherein the oscillating receiver circuit consists of at least one inductor and at least one capacitor, wherein the capacitance of the oscillating receiver circuit is varied stepwise by connecting or disconnecting a plurality of individual capacitors and is finally set such that the interrogation signal which is received by the transponder assumes a voltage value which is the maximum within the variation range, and wherein the capacitance values of the capacitors are stepped in binary-weighted fashion and the capacitors are controlled by binary counting,
**characterised in**
**that**, for tuning purposes, all the values of the capacitors in the variation range are switched, the counter status at the maximum voltage value is retained and, finally, the capacitor control is set for this counter status.

2. Method according to Claim 1, **characterised in that** the tuning is carried out immediately following the beginning of the reception of the interrogation signal.

3. Method according to Claim 1, **characterised in that** the tuning is carried out following the reception of a corresponding command transmitted by the reader.

4. Method according to any one of Claims 1-3, **characterised in that** the tuning takes place from higher frequencies towards lower frequencies.

5. Method according to any one of Claims 1-3, **characterised in that** the tuning takes place from lower frequencies towards higher frequencies.

## Revendications

1. Procédé pour équilibrer un circuit oscillant de réception d'un transpondeur dans un système RFID à la résonance à la fréquence d'un signal d'interrogation émis par un appareil de lecture, le circuit oscillant de réception étant constitué par au moins une inductance et par au moins une capacité, la capacité du circuit oscillant de réception étant modifiée pas-à-pas par le branchement ou le débranchement d'une multiplicité de condensateurs individuels et étant réglée finalement de telle sorte que le signal d'interrogation reçu par le transpondeur prend une valeur de tension maximale à l'intérieur de la gamme de variation, et les valeurs des capacités de condensateurs étant échelonnées d'une manière pondérée en binaire et la commande des condensateurs s'effectuant au moyen d'un comptage binaire,
**caractérisé en ce que** pour l'équilibrage toutes les valeurs des condensateurs sont commutées dans la gamme de variation, l'état du compteur est arrêté pour la valeur maximale de tension et enfin la commande des condensateurs est réglée pour cet état du compteur.

2. Procédé selon la revendication 1, **caractérisé en ce que** l'équilibrage est exécuté juste après le début de la réception du signal d'interrogation.

3. Procédé selon la revendication 1, **caractérisé en ce que** l'équilibrage est exécuté après la réception d'un ordre correspondant émis par l'appareil de lecture.

4. Procédé selon l'une des revendications 1 à 3, **caractérisé en ce que** l'équilibrage est exécuté depuis des fréquences plus élevées vers des fréquences plus faibles.

5. Procédé selon l'une des revendications 1 à 3, **caractérisé en ce que** l'équilibrage est exécuté depuis des fréquences plus faibles vers des fréquences plus élevées.
